(19) Europäisches Patentamt
European Patent Office
Office européen des brevets

(11) **EP 2 157 865 B1**

(12) # EUROPEAN PATENT SPECIFICATION

(45) Date of publication and mention
of the grant of the patent:
**29.12.2010 Bulletin 2010/52**

(51) Int Cl.:
***A21D 13/08*** (2006.01)   ***A23G 3/40*** (2006.01)

(21) Application number: **08766780.4**

(22) Date of filing: **06.06.2008**

(86) International application number:
**PCT/NL2008/050357**

(87) International publication number:
**WO 2008/150169 (11.12.2008 Gazette 2008/50)**

(54) **BISCUITS AND CRACKERS CONTAINING REDUCED LEVELS OF SATURATED FAT AND METHOD FOR THE MANUFACTURE THEREOF**

GEBÄCKE UND KEKSE MIT REDUZIERTEM ANTEIL AN GESÄTTIGTEN FETTSÄUREN UND HERSTELLUNGSVERFAHREN DAFÜR

BISCUITS ET CRAQUELINS CONTENANT DES NIVEAUX RÉDUITS DE GRAISSES SATURÉES ET PROCÉDÉ POUR LES FABRIQUER

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.06.2007 EP 07109873**

(43) Date of publication of application:
**03.03.2010 Bulletin 2010/09**

(73) Proprietor: **Sime Darby Malaysia Berhad
Kuala Lumpur, 50350 (MY)**

(72) Inventors:
• **PAARDEKOOPER, Robert Hendrikus
NL-2953 GA Alblasserdam (NL)**
• **NOOR, Ahmadilfitri
Negeri Sembilan, 71800 NILAI (MY)**
• **DE RUITER, Gerhard Adriaan
NL-5473 JE Heeswijk-dinther (NL)**
• **ZIEVERINK, Martinus Mathilda Pieter
2613 RM Delft (NL)**

(74) Representative: **Swinkels, Bart Willem
Nederlandsch Octrooibureau
J. W. Frisolaan 13
2517 JS Den Haag (NL)**

(56) References cited:
EP-A- 0 206 850        EP-A- 1 057 887
WO-A- 94/19953         WO-A-2005/089568
WO-A-2006/014322       US-A- 5 908 655
US-A1- 2003 129 294

**Description**

TECHNICAL FIELD OF THE INVENTION

The present invention relates to biscuits and crackers comprising a fat blend that contains reduced levels of saturated fatty acids and a considerable amount of polyunsaturated fatty acids. The invention also provides a method for the manufacture of such biscuits and crackers.

BACKGROUND OF THE INVENTION

Biscuits and crackers typically contain 10-20 wt.% of fat. Examples of fats that are widely employed in biscuits and crackers include butter oil, palm oil, palm kernel oil, coconut oil, hydrogenated vegetable oils and high melting stearin fractions of vegetable oils. A drawback of these fats is the high amount of saturated fatty acids (SAFA) contained therein. It is generally accepted that fats having a high SAFA content, and consequently a low content of unsaturated fatty acids, do not fit in a healthy diet. In addition, it is a widely held view amongst nutritionists that fats containing high levels of polyunsaturated fatty acids (PUFA) fit well into a healthy diet.

Hence, it would be desirable to replace the high SAFA fats in biscuits and crackers by oils that contain substantially lower amounts of saturated fatty acids and a considerable amount of PUFA. However, the use of low SAFA oils in biscuits and crackers poses serious problems. First of all, the use of low SAFA oils, such as sunflower oil and canola oil, yields a biscuit dough or cracker dough that is very sticky, especially during the first phase of the dough preparation process. This stickiness of the dough causes major problems in the industrial manufacture of biscuits and crackers.

In addition, low SAFA oils, and in particular low SAFA oils containing appreciable levels of PUFA, have the disadvantage that they are easily oxidised, especially during baking and subsequent storage. Oxidation of unsaturated vegetable oils leads to objectionable off-flavours that are often described as 'cardboard-like'.

EP-A 0 206 850 describes a shelf-stable cookie having a moist, cake-like soft textured crumb structure over an extended period of time and having bloom resistance comprising flavour chips, a humectant, a shortening or fat for promoting softness and for preventing fat bloom on the flavour chips, and a flavouring ingredient, whereby the cookie does not exhibit seepage of shortening or fat at cookie storage temperatures. The examples of the European patent application describe the preparation of a fudge chocolate chip cookie containing partially hydrogenated blend of soybean and palm oil (1:1). The melting point of the fat is 98-103 °F (36.7-39.4 °C), the solid fat content at 21.1 °C is 13.0%-18.0% and at 26.7 °C it is in the range of 7.0%-11.0%. Due to the partial hydrogenation the PUFA content of this fat is limited.

SUMMARY OF THE INVENTION

The inventors have developed a special fat blend for use in biscuits and crackers that contain substantially reduced levels of SAFA in combination with appreciable levels of PUFA and that can suitably be used in the preparation of biscuits and crackers without giving rise to unacceptable dough stickiness or oil oxidation. The fat blend of the present invention contains at least 30 wt.% of polyunsaturated fatty acids and comprises 50-85 wt.% of a highly unsaturated oil and 15-50 wt.% of a palm oil fraction having a melting point within the range of 27-38 °C. The fat blend of the present invention is further characterised by a low solid fat content at 25 °C of less than 10 wt.%. The unsaturated oil employed in the fat blend is selected from the group consisting of sunflower oil, soybean oil, rapeseed oil, cottonseed oil, safflower oil, marine oil, corn oil, olive oil, linseed oil and combinations thereof.

The inventors have found that despite the low solid fat content at 25 °C the present fat blend can suitably be used to prepare a biscuit dough or cracker dough that does not suffer from stickiness. Furthermore, despite the high level of polyunsaturated fatty acids in the fat blend the biscuits and crackers made with this fat blend exhibit a surprisingly high oxidative stability.

DETAILED DESCRIPTION OF THE INVENTION

Accordingly, one aspect of the invention relates to a method of preparing biscuits or crackers, said method comprising (i) preparing a dough by combining flour, water, leavening agent, a fat blend and optionally further bakery ingredients; and (ii) baking the dough; wherein the fat blend contains at least 30 wt.% of polyunsaturated fatty acids and comprises:

- 50-85 wt.% of a highly unsaturated oil selected from the group consisting of sunflower oil, soybean oil, rapeseed oil, cottonseed oil, safflower oil, marine oil, corn oil, olive oil, linseed oil and combinations thereof; and

- 15-50 wt.% of a palm oil fraction having a melting point within the range of 27-38 °C; and

wherein said fat blend is further characterised by a solid fat content at 25 °C of less than 10 wt.%.

The terms "oil" and "fat" are deemed to be synonyms and encompass lipids such as triglycerides, diglycerides, monoglycerides, phosphoglycerides etc. Most preferably, the oil (or fat) employed in accordance with the present invention is a triglyceride fat.

The term "fatty acid" as used herein encompasses fatty acid residues contained, for instance, in triglycerides.

The N-value $N_1$ equals the solid fat content of a fat at a temperature of t °C as measured by means of ISO 8292 - Animal and vegetable fats and oils - Determination of solid fat content - Pulsed nuclear magnetic resonance method.

The term "marine oil" as used herein refers to an oil that has been isolated from a marine organism, e.g. fish or algae.

Unless indicated otherwise, fatty acid concentrations are expressed as a percentage of the total weight of fatty acid residues and free fatty acids contained in the fat that is contained in the biscuit dough, the cracker dough or the baked dough product. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

The triglyceride composition of fats, unless indicated otherwise, is determined by HPLC silver ion chromatography, using the methodology described in "Separation of Triacylglycerol Species from Interesterified Oils by High-Performance Liquid Chromatography", Jeung Hee Lee et al.; J Amer Oil Chem Soc (2007) 84:211-217. It is noted that the amount of highly unsaturated oil and the amount of palm oil fraction that is employed in the fat blend according to the present invention can reliably be determined from the triglyceride composition of the fat blend.

Besides the highly unsaturated oil and the palm oil fraction the fat blend employed in accordance with the present invention may contain additional oil components, such as, for instance butter oil. The use of a small quantity of butter offers the advantage that genuine butter flavour can be imparted to the final biscuit or cracker.

Typically, the highly unsaturated oil and the palm oil fraction together represent at least 70 wt.%, preferably at least 80 wt.% of the fat blend. Most preferably, the highly unsaturated oil and the palm oil fraction together represent at least 90 wt.% of said fat blend.

The present invention offers the advantage that it enables the preparation of biscuits and crackers containing a low SAFA fat, without using any hydrogenated fats as so called "hardstock". Hence, according to a preferred embodiment, the fat blend employed does not contain hydrogenated fat. Because, partial hydrogenation of unsaturated oils is accompanied by the formation of trans-unsaturated fatty acids and because these trans-unsaturated fatty acids are generally regarded as undesirable, it is preferred that the present fat blend has a trans fatty acid content of less than 2 wt.%, most preferably of less than I wt.%.

The total amount of saturated fatty acids in the present fat blend typically does not exceed 35 wt.%. Even more preferably, the SAFA content of the fat blend does not exceed 30 wt.%, most preferably it does not exceed 28 wt.%. In order to achieve the benefits of the present invention, the fat blend must contain a significant amount of saturated fatty acids. Typically, the fat blend contains at least 10 wt.%, preferably at least 15 wt.% of saturated fatty acids.

According to a preferred embodiment, the palm oil fraction provides a substantial amount of the saturated fatty acids in the fat blend. The palm oil fraction according to the present invention is rich in palmitic acid residues, whereas the levels of palmitic acid in the highly unsaturated oil are almost negligible. Typically, the fat blend of the present invention contains more than 10 wt.% of palmitic acid, more preferably more than 12 wt.% of palmitic acid.

In scientific literature, many health benefits have been attributed to polyunsaturated fatty acids. For this reason, it is preferred that the present fat blend contains at least 35 wt.% of polyunsaturated fatty acids. Surprisingly, even if the present fat blend contains substantial quantities of easily oxidised polyunsaturated acids, no serious problems with oxidation off-flavours are observed.

The fat blend of the present invention advantageously contains 60-80 wt.% of the highly unsaturated oil. The palm oil fraction is advantageously incorporated in the fat blend in an amount of 20-40 wt.%.

The highly unsaturated oil that is employed in accordance with the present invention preferably is a vegetable oil. More preferably, said oil is selected from the group consisting of sunflower oil, soybean oil, rapeseed oil, cottonseed oil, safflower oil, corn oil, olive oil and combinations thereof. Whenever the term sunflower oil is used in here, this term is meant to encompass any type of sunflower oil including, for instance, high oleic sunflower oil. The same holds for other vegetable oils, such as for instance rapeseed oil, which includes high erucic rapeseed oil.

The palm oil fraction employed in accordance with the present invention preferably is a palm mid fraction. Palm mid fractions are rich in PPO-triglycerides, POP triglycerides and PPP-triglycerides. Here, P represents a palmitic acid residue and O represents an oleic acid residue. According to a particularly preferred embodiment, the fat blend employed in accordance with the present invention contains in total 12-30 wt.%, preferably 13-25 wt.% of triglycerides belonging to the group consisting or PPO-triglycerides, POP triglycerides and PPP-triglycerides.

Palm mid fractions are further **characterised in that** the weight ratio of HUH-triglycerides to HHU-triglycerides is very high. Here H represents a saturated $C_{10}$-$C_{22}$ fatty acid residue and U represents an unsaturated $C_{10}$-$C_{22}$ fatty acid residue. The fat blend employed in accordance with the present invention advantageously contains HUH triglycerides and HHU triglycerides in a weight ratio of at least 7:1, most preferably of at least 7.2:1.

Unlike the fats normally employed in biscuits and crackers, the fat blend employed in accordance with the present invention contains very little solid fat at 30 °C. According to a preferred embodiment, the fat blend has a solid fat content at 30 °C of less than 3 wt.%. Most preferably, the fat blend has a solid fat content at 30 °C or less than 1 wt.%

Unlike highly unsaturated oils, the present fat blend preferably contains some solid fat at 15 °C. Preferably, the fat blend has a solid fat content at 15 °C ($N_{15}$)of at least 3 wt.%, more preferably of at least 5 wt.%. Typically, the solid fat content at 15 °C does not exceed 20%.

According to a particularly preferred embodiment, the fat blend of the present invention is characterised by the following solid fat profile:

$$5\% \leq N_{10} \leq 35\%;$$

$$0\% \leq N_{20} \leq 15\%, \text{ preferably } 1\% \leq N_{20} \leq 10\%;$$

and

$$0\% \leq N_{30} \leq 8\%, \text{ preferably } 0\% \leq N_{30} \leq 5\%.$$

The fat blend of the present invention typically exhibits a steep melting curve between 10°C and 20°C. Preferably, the fat blend difference in solid fat content at these two temperatures exceed 10%, more preferably it exceeds 30%.

Biscuits and crackers are advantageously prepared by using baking soda as a leavening agent. Hence, in a preferred embodiment, the leavening agent employed is baking soda. Here the term "baking soda" encompasses any leavening agent that is capable of generating carbon dioxide as a result of reaction between a leavening acid and a leavening base.

Another embodiment of the present invention relates to a biscuit dough or a cracker dough containing 15-50% of fat by weight of flour, 10-20% water by weight of flour and baking soda, said fat being a fat blend as defined herein before. The total fat content of the dough or cracker dough typically is in the range of 10-40 wt.%.

According to a particularly preferred embodiment, the biscuit or cracker dough contains not more than 10 wt. %, even more preferably not more than 8 wt.% of saturated fat. Here the weigh percentage saturated fat is calculated by multiplying the total fat content (wt.%) with the weight ratio of saturated fatty acids to total fatty acids.

Expressed differently, saturated fat preferably represents less than 15%, even more preferably less than 13% of the total caloric content of the biscuit or cracker dough. Here the percentage of total caloric content contributed by saturated fat is calculated by multiplying the percentage of the total caloric content that is derived from fat with the weight ratio of saturated fatty acids to total fatty acids.

The biscuit dough or cracker dough typically contains 40-85 wt.% of flour.

According to a preferred embodiment, the dough is a plastic non-pourable dough, i.e. not a pourable batter.

The biscuit dough of the present invention typically contains 40-70 wt.%, preferably 45-65 wt.% of flour. Besides flour, water, fat and baking soda, the biscuit dough preferably contains an appreciable amount of mono- and/or disaccharides, notably sucrose, glucose, fructose and combinations thereof. Advantageously, the biscuit dough contains 20-40% by weight of flour of saccharides selected from the group consisting of monosaccharides, disaccharides and combinations thereof. The combination of flour, water, fat, baking soda and saccharides typically represents at least 80 wt.%, most preferably at least 90 wt.% of the biscuit dough.

The cracker dough of the present invention typically contains 60-85wt.%, preferably 65-80 wt.% of flour. The combination of flour, water, fat and baking soda typically represents at least 80 wt.%, most preferably at least 90 wt.% of the cracker dough.

Yet another aspect of the present invention relates to a biscuit or a cracker containing 15-50% of fat by weight of flour, said fat being a fat blend as defined herein before.

The total fat content of the biscuit or cracker typically is in the range of 12-45 wt.%. Furthermore, the biscuit or cracker advantageously contains not more than 10 wt.%, even more preferably not more than 8 wt.% of saturated fat. In terms of caloric content, saturated fat preferably represents less than 15%, even more preferably less than 13%) of the total caloric content of the biscuit or cracker.

The invention is further illustrated by means of the following non-limiting examples.

EXAMPLES

Example 1

Biscuits were prepared on the basis of the following dough recipe:

| Ingredient | Weight % |
|---|---|
| Wheat flour | 54.7 |
| Sugar | 17.2 |
| Water | 7.8 |
| Oil | 17.0 |
| Malt extract | 0.7 |
| Salt | 0.6 |
| Sodium bicarbonate | 0.9 |
| Ammonium bicarbonate | 0.2 |
| Tartaric acid | 0.9 |

First, a premix was prepared by thoroughly blending sugar, water, salt, sodium bicarbonate, ammonium bicarbonate, tartaric acid and malt extract. Subsequently, the oil was admixed to the premix. In a high speed kneader, the wheat flour was added to the premix and mixing was continued until a strong elastic dough was obtained.
The dough was removed from the kneader and a dough sheet with a thickness of about 2-2.5 mm was produced by passing the dough through a sheeting roll. Next, round dough pieces (diameter 4-7 cm) were cut from the dough sheet and baked in an oven to yield the biscuits.
Biscuits were produced as described above, using the following oil components:

| | Oil composition |
|---|---|
| Product A | Sunflower oil |
| Product B | Palm oil |
| Product C | 70/30 blend of sunflower oil and palm fraction [#] |
| # palm fraction used is a soft stearin fraction with an iodine value of 43 (obtained as the stearin fraction of palm olein with a iodine value of 56). | |

The properties of the oil components used in products A, B and C are summarised in the following table:

| | Product A | Product B | Product C |
|---|---|---|---|
| Melting point | < 0°C | 38 °C | 22 °C |
| | | | |
| SAFA content | 11 wt.% | 51 wt.% | 24 wt.% |
| PUFA content | 65 wt.% | 10 wt.% | 47 wt.% |
| Palmitic acid content | 6 wt.% | 44 wt.% | 18 wt. % |
| | | | |
| $N_{10}$ | 0% | 50% | 10% |
| $N_{20}$ | 0% | 22% | 2% |

(continued)

|  | Product A | Product B | Product C |
|---|---|---|---|
| $N_{25}$ | 0% | 15% | 0% |
| $N_{30}$ | 0% | 8% | 0% |
|  |  |  |  |
| Triglyceride composition<br>- PPP<br>- PPO<br>- POP | <br>0 wt.%<br>0 wt.%<br><1 wt.% | <br>7 wt.%<br>5 wt.%<br>33 wt.% | <br><1 wt.%<br>2 wt.%<br>16 wt.% |
| - HUH<br>- HHU | <1 wt.%<br>0 wt.% | 34 wt.%<br>5 wt.% | 17 wt.%<br>2 wt.% |

During preparation of the biscuit dough it was observed that the dough prepared with sunflower oil (product A) was much more sticky than the other doughs, making it difficult to handle this particular dough as it tended to stick to equipment. The dough prepared with a fat blend according to the present invention (product C) was found to be very elastic and supple, whereas the dough made with palm oil (product B) was found to be a bit "short".

The biscuits obtained after baking were stored at 36 °C at a relative humidity of 55% for 63 days. During this storage period every 7 days the products were evaluated by an expert panel. The expert panel found that the taste of freshly baked products A, B and C was comparable. However, the panel also observed that the taste of product A deteriorated rapidly during storage. During storage, product A developed clearly perceptible off-notes that the panelists associated with oil oxidation. In contrast, products B and C did not exhibit significant taste deterioration during the evaluation period.

The fact that products B and C performed equally well is quite unexpected given that product C contains a high level of polyunsaturated fatty acids (PUFA). Oils containing appreciable levels of PUFA are usually rapidly oxidised during baking and storage, resulting in the development of an undesirable oxidation off-flavour (see findings for product A).

Example 2

Example 1 was repeated, except that in product C the oil component was replaced by an oil blend of the following composition:

| Sunflower oil | 75 wt.% |
|---|---|
| Palm fraction [#] | 15 wt.% |
| Palm oil stearin [$] | 10 wt.% |
| # soft stearin fraction with an iodine value of 43 (see Example 1)<br>$ palm stearin having an iodine value of 35 | |

The properties of the oil components used in product C is summarised below:

|  | Product C |
|---|---|
| Melting point | 35 °C |
| SAFA content | 23 wt.% |
| PUFA content | 50 wt.% |
| Palmitic acid content | 18 wt.% |
| $N_{10}$ | 11% |

(continued)

|  | Product C |
|---|---|
| $N_{20}$ | 6% |
| $N_{25}$ | 4% |
| $N_{30}$ | 3% |
| Triglyceride composition<br>- PPP<br>- PPO<br>- POP<br><br>- HUH<br>- HHU | <br>4 wt.%<br>2 wt.%<br>10 wt.%<br><br>12 wt.%<br>2 wt.% |

The performance of product C was very similar to that of product C of Example 1.

Example 3

Example 1 was repeated, except that in product C the oil component was replaced by an oil blend of the following composition:

| Sunflower oil | 80 wt.% |
|---|---|
| Interesterified blend [#] | 15 wt.% |
| Palm oil super stearin [$] | 5 wt.% |
| # interesterified blend of palm stearine having an iodine value of 35 (70 wt.%) and palm kernel oil (30 wt.%)<br>$ stearin fraction of palm stearin having an iodine value of 12 | |

The properties of the oil components used in product C is summarised below:

|  | Product C |
|---|---|
| Melting point | 41 °C |
| SAFA content | 25 wt.% |
| PUFA content | 53 wt.% |
| Palmitic acid content | 16 wt.% |
| $N_{10}$ | 14% |
| $N_{20}$ | 10% |
| $N_{25}$ | 8% |
| $N_{30}$ | 6% |
| Triglyceride composition<br>- PPP<br>- PPO<br>- POP<br><br>- HUH | <br>10 wt.%<br>4 wt.%<br>2 wt.%<br><br>2 wt.% |

(continued)

|  | Product C |
|---|---|
| - HHU | 4 wt.% |

Again, the performance of product C was very similar to that of product C of Example 1.

**Claims**

1.  A method of preparing biscuits or crackers, said method comprising (i) preparing a dough by combining flour, water, leavening agent, a fat blend and optionally further bakery ingredients; and (ii) baking the dough; wherein the fat blend contains at least 30 wt.% of polyunsaturated fatty acids and comprises:

    - 50-85 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
    - 15-50 wt.% of a palm oil fraction having a melting point within the range of 27-38 °C;

    and wherein said fat blend is further **characterised by** a solid fat content at 25 °C of less than 10 wt.%.

2.  Method according to claim 1, wherein the fat blend does not contain hydrogenated fat.

3.  Method according to claim 1 or 2, wherein the fat blend contains not more than 35 wt.%, preferably 10-30 wt.% of saturated fatty acids.

4.  Method according to any one of the preceding claims, wherein the fat blend contains more than 10 wt.% of palmitic acid.

5.  Method according to any one of the preceding claims, wherein the fat blend contains at least 35 wt.% of polyunsaturated fatty acids.

6.  Method according to any one of the preceding claims, wherein the fat blend has a trans fatty acid content of less than 2 wt.%, most preferably of less than 1 wt.%.

7.  Method according to any one of the preceding claims, wherein the fat blend contains in total 12-30 wt.%, preferably 13-25 wt.% of triglycerides belonging to the group consisting of PPO-triglycerides, POP triglycerides and PPP-triglycerides, wherein P represents a palmitic acid residue and O represents an oleic acid residue.

8.  Method according to any one of the preceding claims, wherein the fat blend contains HUH triglycerides and HHU triglycerides in a weight ratio of at least 7:1, preferably of at least 7.2:1, wherein H represents a saturated $C_{10}$-$C_{22}$ fatty acid residue and U represents an unsaturated $C_{10}$-$C_{22}$ fatty acid residue.

9.  Method according to any one of the preceding claims, wherein the fat blend is **characterised by** the following solid fat profile:

$$5\% \leq N_{10} \leq 35\%;$$

$$0\% \leq N_{20} \leq 15\%;$$

and

$$0\% \leq N_{30} \leq 8\%.$$

10. Biscuit dough or cracker dough containing 15-50% of fat by weight of flour, 10-20% water by weight of flour and baking soda, said fat containing at least 30 wt.% of polyunsaturated fatty acids and comprising:

   - 50-85 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
   - 15-50 wt.% of a palm oil fraction having a melting point within the range of 27-38 °C;

   wherein said fat is further **characterised by** a solid fat content at 25 °C of less than 10 wt.%.

11. Dough according to claim 10, wherein the dough contains 40-85 wt.% of flour.

12. Biscuit dough according to claim 10 or 11, wherein the dough contains 20-40% by weight of flour of saccharides selected from the group consisting of monosaccharides, disaccharides and combinations thereof.

13. Biscuit or cracker containing 15-50% of fat by weight of flour, said fat containing at least 30 wt.% of polyunsaturated fatty acids and comprising:

   - 50-85 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
   - 15-50 wt.% of a palm oil fraction having a melting point within the range of 27-38 °C;

   wherein said fat is further **characterised by** a solid fat content at 25 °C of less than 10 wt.%.

**Patentansprüche**

1. Verfahren zur Herstellung von Keksen und Kräckern, wobei das Verfahren umfasst: (i) die Herstellung eines Teiges durch Verbinden von Mehl, Wasser, Backtriebmittel, einer Fettmischung und ggf. weiterer Backzutaten; und (ii) das Backen des Teiges, worin die Fettmischung mindestens 30 Gew.-% an mehrfach ungesättigten Fettsäuren enthält und umfasst:

   - 50 bis 85 Gew.-% hoch ungesättigten Öls ausgewählt aus der Gruppe bestehend aus Sonnenblumenöl, Sojabohnenöl, Rapssamenöl, Baumwollsamenöl, Distelöl, Fischöl, Maisöl, Olivenöl, Leinsamenöl und Kombinationen davon und
   - 15 bis 50 Gew.-% einer Palmöl-Fraktion mit einem Schmelzpunkt innerhalb des Bereichs von 27 bis 38°C

   und worin die Fettmischung weiterhin durch einen Gehalt von weniger als 10 Gew.-% an bei 25°C festem Fett **gekennzeichnet** ist.

2. Verfahren nach Anspruch 1, worin die Fettmischung kein gehärtetes Fett enthält.

3. Verfahren nach Anspruch 1 oder 2, worin die Fettmischung nicht mehr als 35 Gew.-%, vorzugsweise 10 bis 30 Gew.-%, an gesättigten Fettsäuren enthält.

4. Verfahren nach einem der vorhergehenden Ansprüche, worin die Fettmischung mehr als 10 Gew.-% an Palmitinsäure enthält.

5. Verfahren nach einem der vorhergehenden Ansprüche, worin die Fettmischung mindestens 35 Gew.-% an mehrfach ungesättigten Fettsäuren enthält.

6. Verfahren nach einem der vorhergehenden Ansprüche, worin die Fettmischung einen Gehalt an trans-Fettsäuren von weniger als 2 Gew.-%, vorzugsweise weniger als 1 Gew.-% hat.

7. Verfahren nach einem der vorhergehenden Ansprüche, worin die Fettmischung insgesamt 12 bis 30 Gew.-%, vorzugsweise 13 bis 25 Gew.-% an Triglyceriden aus der Gruppe bestehend aus PPO-Triglyceriden, POP-Triglyceriden und PPP-Triglyceriden enthält, worin P einen Palmitinsäure-Rest und O einen Ölsäure-Rest darstellt.

8. Verfahren nach einem der vorhergehenden Ansprüche, worin die Fettmischung HUH-Triglyceride und HHU-Triglyceride in einem Gewichtsverhältnis von mindestens 7:1, vorzugsweise mindestens 7,2:1 enthält, worin H einen gesättigten $C_{10}$-$C_{22}$-Fettsäure-Rest und U einen ungesättigten $C_{10}$-$C_{22}$-Fettsäure-Rest darstellt.

9. Verfahren nach einem der vorhergehenden Ansprüche, worin die Fettmischung durch das nachfolgende Profil an festem Fett **gekennzeichnet** ist:

$$5\ \%\ \leq N_{10}\ \leq\ 35\%$$

$$0\%\ \leq N_{20}\ \leq\ 15\%$$

und

$$0\%\ \leq N_{30}\ \leq\ 8\%.$$

10. Keksteig oder Kräckerteig enthaltend 15 bis 50 % Fett, bezogen auf das Gewicht des Mehls, 10 bis 20 % Wasser, bezogen auf das Gewicht des Mehls, und Backpulver, wobei das Fett mindestens 30 Gew.-% an mehrfach ungesättigten Fettsäuren enthält und umfassend:

- 50 bis 85 Gew.-% hoch ungesättigten Öls ausgewählt aus der Gruppe bestehend aus Sonneblumenöl, Sojabohnenöl, Rapssamenöl, Baumwollsamenöl, Diestelöl, Fischöl, Maiskeimöl, Olivenöl, Leinsamenöl und Kombinationen davon, und
- 15 bis 50 Gew.-% einer Palmöl-Fraktion mit einem Schmelzpunkt innerhalb des Bereichs von 27 bis 38°C,

worin das Fett weiterhin durch einen Gehalt an bei 25°C festem Fett von weniger als 10 Gew.-% **gekennzeichnet** ist.

11. Teig nach Anspruch 10, worin der Teig 40 bis 85 Gew.-% Mehl enthält.

12. Keksteig nach Anspruch 10 oder 11, worin der Teig, bezogen auf das Gewicht des Mehls, 20 bis 40 Gew.-% aus der Gruppe bestehend aus Monosacchariden, Disacchariden und Kombinationen davon ausgewählte Saccharide enthält.

13. Keks oder Kräcker enthaltend 15 bis 50 % Fett, bezogen auf das Gewicht des Mehls, wobei das Fett mindestens 30 Gew.-% an mehrfach ungesättigten Fettsäuren enthält und umfassend:

- 50 bis 85 Gew.-% eines hoch ungesättigten, aus der Gruppe bestehend aus Sonnenblumenöl, Sojabohnenöl, Rapssamenöl, Baumwollsamenöl, Diestelöl, Fischöl, Maiskeimöl, Olivenöl, Leinsamenöl und Kombinationen davon ausgewählten Öls und
- 15 bis 50 Gew.-% einer Palmöl-Fraktion mit einem Schmelzpunkt innerhalb des Bereichs von 27 bis 38°C,

worin das Fett weiterhin durch einen Gehalt von weniger als 10 Gew.-% an bei 25°C festem Fett **gekennzeichnet** ist.

**Revendications**

1. Procédé de préparation de biscuits ou de crackers, ledit procédé comprenant (i) la préparation d'une pâte obtenue en mélangeant de la farine, de l'eau, un agent levant, un mélange de matières grasses et éventuellement d'autres ingrédients de pâtisserie ; et (ii) la cuisson de la pâte ; dans lequel le mélange de matières grasses contient au moins 30 % en poids d'acides gras polyinsaturés et comprend :

- de 50 à 85 % en poids d'une huile hautement insaturée sélectionnée parmi le groupe constitué d'huile de tournesol, d'huile de soja, d'huile de colza, d'huile de coton, d'huile de carthame, d'huile de poisson, d'huile de maïs, d'huile d'olive, d'huile de lin et de combinaisons de celles-ci ; et

- de 15 à 50 % en poids d'une fraction d'huile de palme dont le point de fusion se situe dans la plage allant de 27 à 38°C ;

et dans lequel ledit mélange de matières grasses est en outre **caractérisé par** une teneur en corps gras solides à 25°C inférieure à 10 % en poids.

2. Procédé selon la revendication 1, selon lequel le mélange de matières grasses ne contient pas de matière grasse hydrogénée.

3. Procédé selon la revendication 1 ou 2, selon lequel le mélange de matières grasses ne contient pas plus de 35 % en poids, de préférence de 10 à 30 % en poids d'acides gras saturés.

4. Procédé selon l'une quelconque des revendications précédentes, selon lequel le mélange de matières grasses contient plus de 10 % en poids d'acide palmitique.

5. Procédé selon l'une quelconque des revendications précédentes, selon lequel le mélange de matières grasses contient au moins 35 % en poids d'acides gras polyinsaturés.

6. Procédé selon l'une quelconque des revendications précédentes, selon lequel le mélange de matières grasses comprend une teneur en acides gras trans inférieure à 2 % en poids, idéalement inférieure à 1 % en poids.

7. Procédé selon l'une quelconque des revendications précédentes, selon lequel le mélange de matières grasses contient au total de 12 à 30 % en poids, de préférence de 13 à 25 % en poids de triglycérides appartenant au groupe composé de triglycérides PPO, de triglycérides POP et de triglycérides PPP, P représentant un résidu d'acide palmitique et O représentant un résidu d'acide oléique.

8. Procédé selon l'une quelconque des revendications précédentes, selon lequel le mélange de matières grasses contient des triglycérides HUH et des triglycérides HHU dans un rapport massique d'au moins 7:1, de préférence d'au moins 7,2:1, H représentant un résidu d'acides gras $C_{10}$-$C_{22}$ saturés et U représentant un résidu d'acides gras $C_{10}$-$C_{22}$ insaturés.

9. Procédé selon l'une quelconque des revendications précédentes, selon lequel le mélange de matières grasses est **caractérisé par** le profil de matières grasses solides suivant :

$$5 \% \leq N_{10} \leq 35 \% \text{ ;}$$

$$0 \% \leq N_{20} \leq 15 \% \text{ ;}$$

et

$$0 \% \leq N_{30} \leq 8 \%.$$

10. Pâte à biscuit ou pâte à cracker contenant de 15 à 50 % de matières grasses par poids de farine, de 10 à 20 % d'eau par poids de farine et de bicarbonate de soude, lesdites matières grasses contenant au moins 30 % en poids d'acides gras polyinsaturés et comprenant :

- de 50 à 85 % en poids d'une huile hautement insaturée sélectionnée parmi le groupe composé d'huile de tournesol, d'huile de soja, d'huile de colza, d'huile de coton, d'huile de carthame, d'huile de poisson, d'huile de maïs, d'huile d'olive, d'huile de lin et de combinaisons de celles-ci ; et
- de 15 à 50 % en poids d'une fraction d'huile de palme dont le point de fusion se situe dans la plage allant de 27 à 38°C ;

selon laquelle lesdites matières grasses sont en outre **caractérisées par** une teneur en matières grasses solides à 25°C inférieure à 10 % en poids.

11. Pâte selon la revendication 10, la pâte contenant de 40 à 85 % en poids de farine.

12. Pâte à biscuit selon la revendication 10 ou 11, le biscuit contenant de 20 à 40 % par poids de farine de saccharides sélectionnés parmi le groupe composé de monosaccharides, de disaccharides et de combinaisons de ceux-ci.

13. Biscuit ou cracker contenant de 15 à 50 % de corps gras par poids de farine, lesdites matières grasses contenant au moins 30 % en poids d'acides gras polyinsaturés et comprenant :

   - de 50 à 85 % en poids d'une huile hautement insaturée sélectionnée parmi le groupe composé d'huile de tournesol, d'huile de soja, d'huile de colza, d'huile de coton, d'huile de carthame, d'huile de poisson, d'huile de maïs, d'huile d'olive, d'huile de lin et de combinaisons de celles-ci ; et
   - de 15 à 50 % en poids d'une fraction d'huile de palme dont le point de fusion se situe dans la plage allant de 27 à 38°C ;

   selon lequel lesdites matières grasses sont en outre **caractérisées par** une teneur en corps gras solides à 25°C inférieure à 10 % en poids.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0206850 A

**Non-patent literature cited in the description**

- **Jeung Hee Lee et al.** Separation of Triacylglycerol Species from Interesterified Oils by High-Performance Liquid Chromatography. *J Amer Oil Chem Soc,* 2007, vol. 84, 211-217